# EUROPEAN PATENT APPLICATION

(11) **EP 3 598 749 A1**
(43) Date of publication of application: **22.01.2020**
(21) Application number: 18305992.2
(22) Date of filing: 19.07.2018
(51) Int. Cl.: H04N 13/117, H04N 13/344, G06T 15/20, H04N 13/383

(54) **A METHOD AND APPARATUS FOR GENERATING AN IMMERSIVE IMAGE FROM IMAGES CAPTURED BY A PLURALITY OF CAMERAS**

(71) Applicant: THOMSON LICENSING, 92130 Issy les Moulineaux (FR)
(72) Inventor: DANIEAU, Fabien, 35576 Cesson-Sévigné (FR); LEROY, Bertrand, 35576 Cesson-Sévigné (FR); DUMAS, Olivier, 35576 Cesson-Sévigné (FR); LOPEZ, Thomas, 35576 Cesson-Sévigné (FR)
(74) Representative: Huchet, Anne

(57) **Abstract**

A device for generating an image by projecting a plurality of source images onto this image according to a center of projection and a mapping. A source image is associated with a view direction according to the center of projection and the projection itself, the device comprises a memory associated with a processor configured for (1) obtaining a direction of interest for said image; and (2) for a pixel of the immersive image to generate, when a plurality of source pixels from the plurality of source images are projectable onto said pixel according to the center of projection and the mapping, one of these source pixels is selected to provide the considered pixel a color value. The selecting of the source pixel is performed according to the angle formed the direction of interest and the view direction of the source image the source pixel belongs to.

## Description

### 1. Technical Field

The present disclosure generally relates to generating an immersive image, for instance a panoramic image or an omnidirectional image by projecting and stitching a plurality of images onto a convex 3D volume. Particularly, but not exclusively, the technical field of the present disclosure is related to generating immersive images according to the location of an area of interest in the resulting image. The present principles also relate to generating two immersive images from stereo images.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

With the advent of large field of view display devices such as Head Mounted Display devices (HMD), new audiovisual experiences are provided. In such configurations, a user can move his head and explore a 3D scene (up to a 4 π steradian field of view), leading to a strong feeling of immersion. One key challenge of this new technological domain is the creation of immersive content. Several camera rigs have been designed to capture images in all directions. Such rigs are made of an assembly of regular cameras covering up to a 360° field of view. All the captured images are then stitched into one image according to a projection mapping (e.g. equirectangular mapping, cylinder mapping, cube mapping or pyramidal mapping). For example, an equirectangular projection is used to store the plurality of images from the cameras into a regular two-dimensional picture.

Stereoscopic immersive images can also be created with this technique. Each camera of the rig is duplicated in order to capture an image for the left eye and another for the right eye. Two spherical images are then generated. Numerous modeling tools or compositing tools propose this feature. The adjustment of the stereoscopic effect remains a manual task though.

When stitching images from the plurality of cameras in a common immersive image, some neighbor pixels are provided by different cameras. As these cameras are oriented in different directions, the stereoscopic effect may be inverted from one pair of cameras to another pair of cameras providing neighbors pixels to the immersive image. This result leads to an inconsistent stereoscopic effect for some point of views. It is for example the case for pole regions of a spherical mapping such as the equirectangular mapping.

This issue may be circumvented by multi-points of view techniques. Images captured by the cameras are stored instead of being merged into one immersive image. So, when the user is looking at a specific point, only the proper images are displayed. The more captured points of view, the better the rendering. However, this approach requires to store and to stream a lot of images. Similarly, a light field approach proposes to store numerous points of view or depth information. This also requires new image and video formats, and new multimedia players.

So, there is a lack for a technical solution improving the stereoscopic rendering of immersive images and video while remaining compatible with legacy video formats and video architecture.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles relate a device for generating an image by projecting a plurality of source images onto this image according to a center of projection and a mapping. A source image is associated with a view direction according to the center of projection and the projection itself. the device comprises a memory associated with a processor configured for:
- obtaining a direction of interest for said image; and
- for a pixel of the immersive image to generate, when a plurality of source pixels from the plurality of source images are projectable onto said pixel according to the center of projection and the mapping, one of these source pixels is selected to provide the considered pixel a color value. The selecting of the source pixel is performed according to the angle formed the direction of interest and the view direction of the source image the source pixel belongs to.

The present disclosure also relates to a method implemented in such a device.

### 4. Brief Description of Drawings

The present disclosure will be better understood, and other specific features and advantages will emerge upon reading the following description, the description making reference to the annexed drawings wherein:
- **Figures 1a and 1b** illustrate the projection of two source images onto a convex 3D surface, a sphere in figure 1a, a cube in figure 1b, according to a non-restrictive embodiment of the present principles.
- **Figure 2** illustrates the projection of a plurality of source images onto a sphere and the generating of an immersive image according to a mapping, according to a non-restrictive embodiment of the present principles.
- **Figure 3** diagrammatically illustrates the provenance of source pixels of twelve source images in an immersive image and the location of the projection onto a sphere of these provenances, according to a non-restrictive embodiment of the present principles.
- **Figure 5** illustrates a method 50 for generating an image from a plurality of source images, in a device 60 (described with regard to figure 6), according to a non-restrictive embodiment of the present principles.

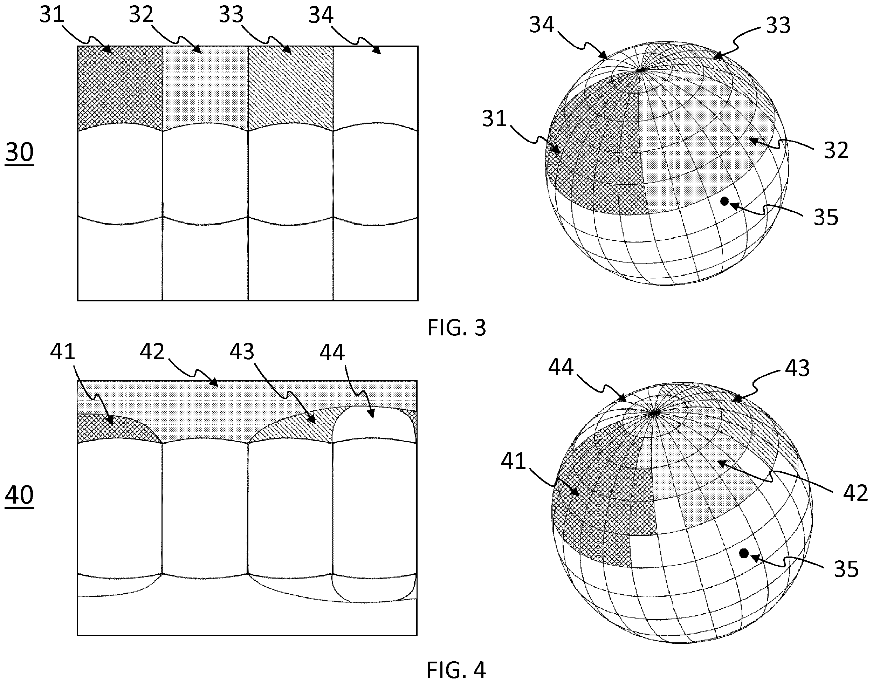

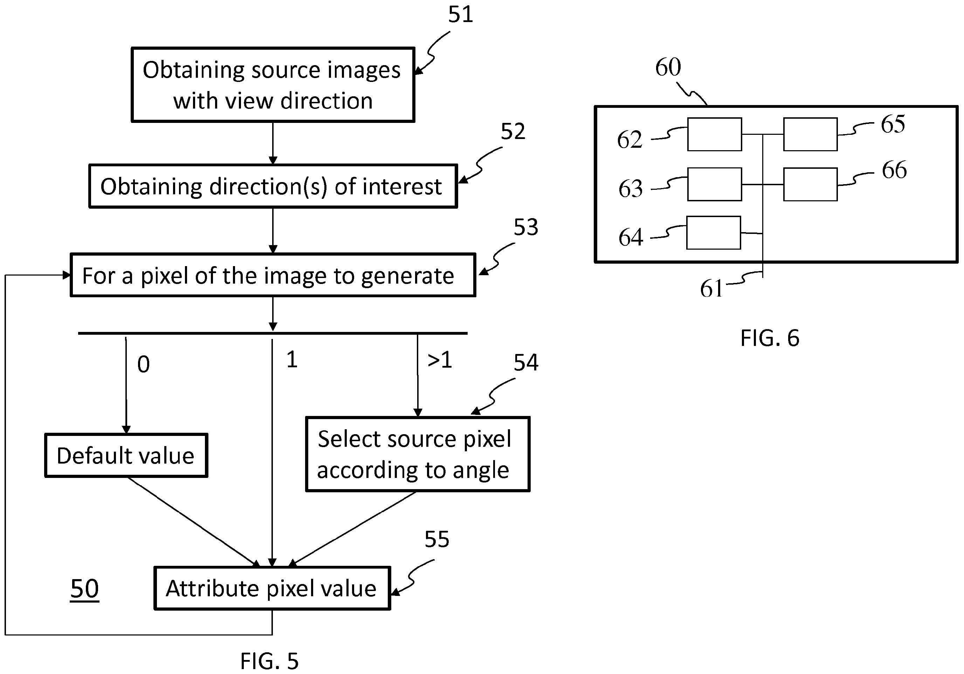

- **Figure 4** diagrammatically illustrates the provenance of source pixels of twelve source images in an immersive image generated according to the method in relation to figure 5, according to a non-restrictive embodiment of the present principles.
- **Figure 6** shows an example architecture of a device 60 which may be configured to implement a method described in relation with figure 5, according to a non-restrictive embodiment of the present principles.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

According to the present principles, an immersive image, for instance a panoramic image or an omnidirectional image, is generated by projecting and stitching a plurality of source images, for example captured by several cameras mounted on a camera rig, onto a convex 3D volume such as a sphere, a cube, a cylinder or a pyramid. The present principles are particularly advantageous when generating two immersive images from two sets of images captured by a stereo rig of cameras or a rig of stereo cameras. Source images are associated with a view direction according to the location of their projection onto the convex 3D volume. Typically, the view direction of a source image corresponds to the projection direction of the center of the source image.

A 3D direction of interest is obtained for the resulting image relatively to the center of the convex 3D volume. This direction of interest may be obtained by several means. For instance, a regions of interest detection process may be applied to the source images to localize a region of interest on the convex 3D volume and the direction of interest may be defined according to this region.

When projecting source images onto the convex 3D volume, several source pixels may be projectable onto a given pixel of the image to generate. The selection of which of the projectable source pixels is used in the generated image is the stitching process. According to the present principles, the selection of the projectable source pixel for a given pixel of the image to generate is performed according to the angle formed between the direction of interest and the view direction of the source image the projectable source pixel belongs to.

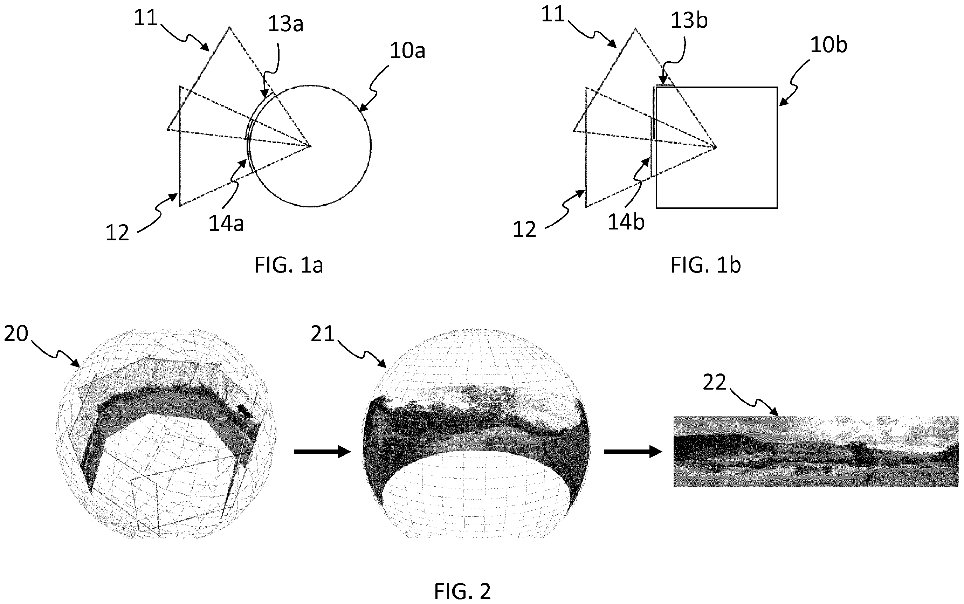

**Figures 1a and 1b** illustrate the projection of two source images onto a convex 3D surface, a sphere in figure 1a, a cube in figure 1b. Objects are represented in two dimensions on figure 1a and 1b for the sake of clarity, but same principles apply without loss of generality in three dimensions. In these examples, source images 11 and 12 are captured by cameras sharing a common focal center and aiming at different view directions in the 3D space. Because images 11 and 12 have the same focal center, they may be projected according to this common focal center used as a center of projection onto a convex 3D surface 10a or 10b on which the image to generate is mapped. The projection of image 12 onto the sphere 10a occupies an area 14a of the sphere 10a and the projection of image 11 occupies an area 13a. Similarly, the projection of image 12 onto cube 10b occupies area 14b on a face of the cube. The projection of image 11 on cube 10b occupies two areas 13b on two faces of the cube. These areas, 13a and 14a in the example of figure 1a and 13b and 14b in the example of figure 1b overlap. For a pixel P of the image to generate that is mapped on the volume at this overlapping area, a source pixel from image 11 and a source pixel from image 12 are projectable onto pixel P. One of these two projectable source pixel has to be selected to populate the image to generate. A well-known method consists in selecting the source pixel having the shortest 3D Euclidian distance to the center of projection. Then, a mapping operator is used to 'unfold' the image mapped on the convex 3D volume to generate the immersive image as a rectangular frame of pixels. For a given convex 3D volume, several mapping operators may be considered. For example, for a sphere, equirectangular projection, Cassini projection or a sinusoid projection for instance may be used. Regarding cube mappings, different face arrangements and orientations may be considered.

**Figure 2** illustrates the projection of a plurality of source images onto a sphere and the generating of an immersive image according to a mapping. In a step 20, a plurality of source images is obtained. Source images are associated with a view direction according to the projection center used for the generating of the immersive image. For example, source images may share a common focal center. In a step 21, source images are projected onto the convex 3D surface according to a central projection. In the example of figure 2, source images only cover a part of the sphere. In other examples, they cover the 4 pi steradian of the surface of the sphere. In a step 22, the image to generate is unfolded according to a mapping operator to generate the immersive image. Such an image may be rendered around a point of view, for instance corresponding to the center of projection to be watched by a user.

**Figure 3** diagrammatically illustrates the provenance of source pixels of twelve source images in an immersive image and the location of the projection onto a sphere of these provenances. In figure 3, a classical stitching, selecting a source pixel according to its Euclidian distance to the center of projection is used. In this example, the projection onto the sphere is equirectangular. Figure 3 is simplified for the sake of explanation. For illustration, the provenance of four source images 31 to 34 are indicated on frame 30 (i.e. the generated immersive image). The same provenance is reported on the sphere at the right of figure 3. Using such a stitching process, the poles of the sphere are covered by pixels coming from four different source images. At the north pole of the sphere of figure 3, pixels from four regions are placed next to each other. When displaying frame 30, for example on a virtual sphere around a user in a HMD, some artifacts are visible in regions with so many seams. In addition, the direction of interest, represented by point 35 on figure 3, does usually not point to such regions. Even if a user is never prevented to look in such a direction, s/he usually gazing at the direction of interest. However, when displaying stereo images, as cameras having captured the source images are oriented in different directions, the stereoscopic effect may be inverted from one pair of cameras to another pair of cameras providing neighbors pixels to the immersive image. This result leads to an inconsistent stereoscopic effect for some point of views.

**Figure 5** illustrates a method 50 for generating an image from a plurality of source images, in a device 60 (described with regard to figure 6), according to a non-restrictive embodiment of the present principles.

In a step 51, the different parameters of the device 60 are updated. In particular, the plurality of source images is obtained from a source. A source image is associated with a view direction that is determined by the extrinsic parameters of the camera which has captured it. The view direction of an image corresponds to the direction from the center of projection to the center of the source image. A sequence of a plurality of source images may be obtained in the form of a video, an immersive image being generated for each plurality of source images of the sequence.

In a step 52, a direction of interest is obtained. In an embodiment, the direction of interest is a metadata associated with the plurality of source images. In another embodiment, image processing techniques may be used to determine the direction of interest by analysing the source images. For instance, detection of high saliency areas in the source images is a well-known technique to determine objects and regions of interest in an image. One of the detected regions is selected and the direction of interest is determined according to the location of the projection of the selected region on the convex 3D volume. In both embodiment, if no direction of interest is obtained, a default direction of interest is determined, for example, the very first direction set up at the starting of the immersive rendering process. Any other suitable image processing technique for detecting objects or regions of interest may be used. In a variant of both embodiments, two or more directions of interest are obtained. Indeed, several objects or areas of the immersive image to generate may be worthy of interest for scenario reasons or imaging reasons.

In a step 53, a pixel of the image to generate is considered. Source pixels from source images candidates to be projected onto this pixel are determined. The determining of projectable source pixels is, for example, performed by using extrinsic parameters of the camera which captured the image; the determining of projectable pixels is performed according to the projection center and the selected projection mapping in any case. At this step, if there is no projectable source pixel onto the considered pixel of the image to generate, a default color value is attributed to the considered pixel at step 55. The default color value is for example black, gray or white. If only one source pixel is projectable onto the considered pixel, then, the color value of this unique projectable source pixel is attributed to the considered pixel at step 55. If more than one source pixel is projectable onto the considered pixel, a selection is performed at a step 54, before attributing the color value of the selected source pixel at step 55.

In a step 54, one of the projectable source pixels is selected according to the view direction of the source image that a projectable source pixel belongs to and the direction of interest obtained at step 52. A projectable source pixel belongs to a source image. This source image is associated with a view direction. This view direction forms an angle in the 3D space with the direction of interest. As there is a plurality of projectable source pixels, a plurality of angles is determined, each angle being related to one projectable source pixel. The projectable source pixel associated with the lowest angle is selected and its color value is attributed to the considered pixel at step 55. In another embodiment, several directions of interest have been obtained at step 52. In this embodiment, the view direction of the source image of a projectable source pixel forms an angle in the 3D space with each of the directions of interest. So, it is possible to select the source pixel associated with the lowest angle of the plurality of plurality of angles. In a variant, it is possible to determine an average or median angle for each projectable source pixel and to select the source pixel having the lowest average or median angle. In another variant, it is possible to determine a global average or median angle of every angles and to select the source pixel having the average or median angle the closest to the global average or median angle. Numerous combinations are suitable to the present method and principles. The color value of the selected source pixel is attributed to the considered pixel at step 55.

**Figure 4** diagrammatically illustrates the provenance of source pixels of twelve source images in an immersive image generated according to the method in relation to figure 5. In figure 4, the direction of interest is represented by point 35. The sphere of figure 5 is divided in quadrilaterals for illustration purposes. In fact, pixel provenances are smoothened. The method generated an image (left or right, in case of stereo rendering) representative of an immersive scene in which there is no stereo stitching artifacts (i.e. artifacts arising when rendering stereo stitched images). One of the advantages of the present method is to be simple, fast, and built according to a direction of interest. As a consequence, if visual artifacts occur, they will occur far from the wanted direction of gaze that is assumed to be the direction of interest. The method is applied separately to the two images, so the processing may be performed in parallel. In figure 4, colors of pixels around North pole are all selected from a same source image resulting in are 42. The four source images of figure 3 are distributed in another way in frame 40. Area 41 comprises the values of the source image of area 31 of figure 3; In the same way, area 42 is filled with pixels from the same source image than area 32, area 43 with pixels from the same source image than area 33 and area 44 with pixels from the same source image than area 34. If the user is watching a stereo immersive image generated according to the present principles, no artifacts will be visible at poles because the direction of the pole is close to the direction of interest. If artifacts are visible, they will be located in the direction opposite to the direction of interest.

**Figure 6** shows an example architecture of a device 60 which may be configured to implement a method described in relation with figure 5. The device 60 comprises following elements that are linked together by a data and address bus 61:
- a microprocessor 62 (or CPU), which is, for example, a DSP (or Digital Signal Processor);
- a ROM (or Read Only Memory) 63;
- a RAM (or Random Access Memory) 64;
- a storage interface 65;
- an I/O interface 66 for reception of data to transmit, from an application; and
- a power supply, e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 63 comprises at least a program and parameters. The ROM 63 may store algorithms and instructions to perform techniques in accordance with present principles. When switched on, the CPU 62 uploads the program in the RAM and executes the corresponding instructions.

The RAM 64 comprises, in a register, the program executed by the CPU 62 and uploaded after switch-on of the device 60, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

The source images are obtained from a source. For example, the source belongs to a set comprising:
- a local memory (63 or 64), e.g. a video memory or a RAM (or Random Access Memory), a flash memory, a ROM (or Read Only Memory), a hard disk;
- a storage interface (65), e.g. an interface with a mass storage, a RAM, a flash memory, a ROM, an optical disc or a magnetic support;
- a communication interface (66), e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

Naturally, the present disclosure is not limited to the embodiments previously described. In particular, the present disclosure is not limited to methods and devices for encoding/decoding a stream carrying data representative of a three-dimension scene (or a sequence of three-dimension scenes) but also extends to methods of rendering a 3D scene in a 3 degrees of freedom manner or in a volumetric manner (i.e. 3DoF+ or 6DoF) to any devices implementing these methods and notably any devices comprising at least one CPU and/or at least one GPU.

The present disclosure also relates to a method (and a device configured) for displaying images rendered from the data stream comprising the information representative of the three-dimension scene.

The present disclosure also relates to a method (and a device configured) for transmitting and/or receiving the stream encoded according to the present principles.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A device for generating an image by projecting a plurality of source images onto said image according to a center of projection and a mapping, a source image being associated with a view direction according to said projection, the device comprising a memory associated with a processor configured for:
- obtaining a direction of interest for said image;
- for a pixel of said image to generate, when a plurality of source pixels from said plurality of source images are projectable onto said pixel according to said center of projection and said mapping, selecting the source pixel from the source image associated with the view direction forming the lowest angle with said direction of interest.

2. The device of claim 1, wherein said processor is configured for detecting a region of interest in one of the plurality of source images, the direction of interest being obtained according to a location of a projection of the detected region of interest onto said image.

3. The device of claim 1, wherein said direction of interest is obtained according to a region of the image gazed by a user, said region being determined by a gaze estimation method.

4. The device of one of the claims 1 to 3 wherein said source images are pairs of stereo images and wherein the processor is further configured to generate a pair of stereo images according to the obtained direction of interest.

5. The device of one of the claims 1 to 4 wherein a plurality of directions of interest is obtained, the processor being configured for selecting a projectable source pixel according to a function of a plurality of angles formed between the view directions of the source images comprising the projectable source pixels and the plurality of directions of interest.

6. A method of generating an image by projecting a plurality of source images onto said image according to a center of projection and a mapping, a source image being associated with a view direction according to said projection, the method comprising:
- obtaining a direction of interest for said image;
- for a pixel of said image to generate, when a plurality of source pixels from said plurality of source images are projectable onto said pixel according to said center of projection and said mapping, selecting the source pixel from the source image associated with the view direction forming the lowest angle with said direction of interest.

7. The method of claim 6, comprising detecting a region of interest in one of the plurality of source images, the direction of interest being obtained according to a location of a projection of the detected region of interest onto said image.

8. The method of claim 6, wherein said direction of interest is obtained according to a region of the image gazed by a user, said region being determined by a gaze estimation method.

9. The method of one of the claims 6 to 8 wherein said source images are pairs of stereo images, the method comprising generating a pair of stereo images according to the obtained direction of interest.

10. The method of one of the claims 6 to 9 wherein a plurality of directions of interest is obtained, a projectable source pixel being selected according to a function of a plurality of angles formed between the view directions of the source images comprising the projectable source pixels and the plurality of directions of interest.
